# EUROPÄISCHE PATENTSCHRIFT

(11) **EP 2 489 507 B1**
(45) Veröffentlichungstag und Bekanntmachung des Hinweises auf die Patenterteilung: **29.07.2015**
(21) Anmeldenummer: 11154745.1
(22) Anmeldetag: 16.02.2011
(51) Int. Cl.: B32B 17/10, C03C 17/09, C03C 17/22, C03C 17/34, C03C 17/36

(54) **Verbundscheibe und Einscheibensicherheitsglas mit niedriger Emissivität**
Compound glazing and single pane safety glass with low emissivity
Plaque composite et verre de sécurité à une vitre de faible émissivité

(43) Veröffentlichungstag der Anmeldung: 22.08.2012
(73) Patentinhaber: Saint-Gobain Glass France, 92400 Courbevoie (FR)
(72) Erfinder: Manz, Florian, 52064 Aachen (DE)
(74) Vertreter: Gebauer, Dieter Edmund

(56) Entgegenhaltungen:
- WO-A2-2009/150343
- US-B2- 7 582 356

## Beschreibung

Die Erfindung liegt auf dem Gebiet der Scheibentechnik und betrifft eine Verbundscheibe mit niedriger Emissivität.

Bei Sonnenstrahlung kann sich der Innenraum von Fahrzeugen stark erwärmen. Eine Verminderung des Wärmeflusses durch Fahrzeugscheiben kann durch Tönung erreicht werden, was jedoch nur in eingeschränktem Maße möglich ist, da zumindest im Sichtfeld eine ausreichende Transparenz gewährleistet sein muss. Zudem sind in allen Ländern zum Teil unterschiedliche gesetzliche Vorschriften bezüglich der Transparenz von Fahrzeugscheiben zu beachten. Häufig kann bei Sonnenstrahlung nur durch eine entsprechende Klimatisierung des Fahrzeuginnenraums ein akzeptabler thermischer Komfort für die Insassen erreicht werden. Abgesehen von dem erhöhten Kraftstoffverbrauch und dem damit verursachten Treibhausgas CO₂ verfügt heute der überwiegende Teil der Neufahrzeuge über eine Klimatisierungseinrichtung für die Fahrgastzelle.

Demgegenüber besteht die Aufgabe der vorliegenden Erfindung darin, transparente Scheiben für Fahrzeuge im Hinblick auf den thermischen Komfort im Fahrzeuginnenraum in vorteilhafter Weise weiterzubilden. Diese und weitere Aufgaben werden nach dem Vorschlag der Erfindung wahlweise durch eine Verbundscheibe für Fahrzeuge mit den Merkmalen von Patentanspruch 1 gelöst. Vorteilhafte Ausgestaltungen der Erfindung sind durch die Merkmale der Unteransprüche angegeben.

Gemäß der Erfindung ist eine Verbundscheibe für eine Öffnung eines Fahrzeugs gezeigt, durch die ein Fahrzeuginnenraum von einer äußeren Umgebung abtrennbar ist. Die Verbundscheibe umfasst in üblicher Weise zwei durch eine thermoplastische Klebeschicht miteinander verbundene Einzelscheiben. Es versteht sich, dass die beiden Einzelscheiben nicht zwangsläufig aus Glas bestehen müssen, sondern dass diese auch aus einem nicht-gläsernen Material, beispielsweise Kunststoff, bestehen können.

Die Verbundscheibe weist ein Schichtensystem auf, das auf einer Scheibenfläche der Einzelscheiben angeordnet ist. Dabei umfasst das Schichtensystem wenigstens eine Funktionsschicht auf Basis zumindest eines Metalls aus der Gruppe, bestehend aus Niob (Nb), Tantal (Ta), Molybdän (Mo) und Zirkonium (Zr), sowie eine der Funktionsschicht zugeordnete dielektrische Schicht mit oder aus einem dielektrischen Material. Erfindungsgemäß ist die Funktionsschicht zwischen der Scheibenfläche und der dielektrischen Schicht angeordnet. Vorzugsweise ist die dielektrische Schicht fahrzeuginnenseitig einer jeden Funktionsschicht angeordnet. Vorzugsweise umfasst das Schichtensystem zumindest zwei Funktionsschichten. Gleichermaßen bevorzugt ist eine jede Funktionsschicht zwischen zwei transparenten dielektrischen Schichten angeordnet, wobei für den Fall, dass zumindest zwei Funktionsschichten vorgesehen sind, vorzugsweise jede Funktionsschicht zwischen zwei transparenten dielektrischen Schichten angeordnet ist. Besonders vorteilhafte Effekte bezüglich des thermischen Komforts des Fahrzeuginnenraums können erreicht werden, wenn das Schichtensystem auf einer fahrzeuginnenseitigen Scheibenfläche einer als Innenscheibe dienenden Einzelscheibe angeordnet ist.

Gezeigt, aber erfindungsgemäß nicht beansprucht, ist ein Einscheibensicherheitsglas, insbesondere ein getempertes Einscheibensicherheitsglas, für eine Öffnung eines Fahrzeugs durch die ein Fahrzeuginnenraum von einer äußeren Umgebung abtrennbar ist, gezeigt. Das Einscheibensicherheitsglas umfasst im Unterschied zur Verbundscheibe nur eine einzige Einzelscheibe sowie ein auf einer Scheibenfläche der Einzelscheibe angeordnetes Schichtensystem. Die Einzelscheibe muss nicht zwangsläufig aus Glas bestehen, sondern kann auch aus einem nicht-gläsernen Material, beispielsweise Kunststoff, gefertigt sein. Das Schichtensystem umfasst wenigstens zwei Funktionsschichten auf Basis zumindest eines Metalls aus der Gruppe, bestehend aus Niob, Tantal, Molybdän und Zirkonium, sowie wenigstens zwei transparente dielektrische Schichten, wobei fahrzeuginnenseitig einer Funktionsschicht jeweils eine dielektrische Schicht angeordnet ist. Vorzugsweise sind die beiden Funktionsschichten jeweils zwischen zwei transparenten dielektrischen Schichten angeordnet. Erfindungsgemäß ist das Schichtensystem auf einer fahrzeuginnenraumseitigen Scheibenfläche der Einzelscheibe angeordnet.

Der Ausdruck "Scheibe" bezieht sich hier und im Weiteren auf eine erfindungsgemäße Verbundscheibe.

Dabei ist die erfindungsgemäße Scheibe vorzugsweise so ausgebildet, dass
- ein fahrzeugaußenseitiges Reflexionsvermögen bezüglich des gesamten Sonnenspektrums größer als 5% ist, und/oder
- ein Transmissionsvermögen im und oberhalb des infraroten Wellenlängenbereichs zu einem Fahrzeuginnenraum hin geringer als 3% ist, und/oder
- ein fahrzeuginnenraumseitiges Reflexionsvermögen für sichtbares Licht (sichtbarer Wellenlängenbereich) kleiner als 7%, insbesondere kleiner als 4%, ist, und/oder
- ein fahrzeuginnenraumseitiges Reflexionsvermögen im infraroten Wellenlängenbereich größer als 10% ist, und/oder
- ein fahrzeuginnenraumseitiges Reflexionsvermögen im und oberhalb des infraroten Wellenlängenbereichs größer als 20% ist, und/oder
- eine fahrzeuginnenraumseitige Emissivität geringer als 50% ist.

Durch die erfindungsgemäße Scheibe kann durch das Schichtensystem für den Fahrzeuginnenraum in besonders vorteilhafter Weise eine Kopplung der thermischen Vorteile einer niedrigen Strahlungsemission und niedrigen Strahlungstransmission mit einem fahrzeuginnenseitigen geringen Reflexionsvermögen bei sichtbarem Licht, einem hohen fahrzeuginnenseitigen Reflexionsvermögen im langwelligen Strahlungsbereich und einem fahrzeugaußenseitig erhöhten Reflexionsvermögen im gesamten Spektrum des Sonnenstrahlungsbereichs erreicht werden. Dies ist möglich, da Fahrzeugscheiben aufgrund in der Praxis typischer Weise auftretender Scheibentemperaturen Strahlung bei Wellenlängen oberhalb von 5000 Nanometer (nm) abgeben. Andererseits strahlt die Sonne die meiste Energie im sichtbaren und nahen infraroten Wellenlängenbereich ab, wobei die Strahlungsenergie oberhalb von ca. 2000 nm nur noch sehr gering ist. Somit kann auf das dem Fahrzeuginnenraum zugewandte Reflexionsvermögen der Scheibe bei Wellenlängen im und oberhalb der sichtbaren Wellenlängen gezielt Einfluss genommen werden. Insbesondere wird durch die erfindungsgemäße Scheibe erreicht, dass bei hoher Sonneneinstrahlung, beispielsweise im Sommer, aufgrund des relativ niedrigen Emissionsvermögens des Schichtensystems relativ wenig Wärme in den Fahrzeuginnenraum eingetragen und andererseits bei niedrigen Außentemperaturen aufgrund des relativ hohen Reflexionsvermögens bei großen Wellenlängen im und oberhalb des IR-Bereichs die Strahlungswärme ein wohliges Raumklima erzeugt wird. Dem unerwünschten Effekt einer "kalten Schulter" bzw. "kalten Kopfes" kann dadurch entgegen gewirkt werden. Ein weiterer Aspekt der Erfindung stellt die Möglichkeit dar, extrem dunkle Scheiben (T_{L(A)}<20%) zu realisieren, die besonders wenig der von außen einstrahlenden Sonnenstrahlungsenergie in die Fahrgastzelle lassen. Dies kann durch eine hohe Absorption und äußere Reflexion der Sonnenstrahlungsenergie bewerkstelligt werden. Bei herkömmlichen Fahrzeugscheiben ist die dunkle Tönung dadurch begrenzt, dass den Insassen die Reflexion des sichtbaren Lichts stört beziehungsweise ablenkt oder irritiert. Die fahrzeuginnenseitige Beschichtung mit der niedrigen Emissivität ist so zu gestalten, dass die Reflexion der sichtbaren Wellenlängen merklich reduziert wird. Die erfindungsgemäße Scheibe löst somit einen Zielkonflikt zwischen einem geringen Wärmeeintrag in den Fahrzeuginnenraum und einer guten Sicht bzw. Transparenz der Scheibe für im Fahrzeuginnenraum befindliche Personen in zufrieden stellender Weise.

Vorteilhafter Weise ist die Scheibe getönt, so dass infrarote und sichtbare Strahlung großteils absorbiert werden kann, um die transmittierte Energie zu verringern. Zwar führt die erhöhte Absorption der Scheibe zu einer stärkeren Erwärmung, jedoch kann einer vermehrten Abstrahlung von Wärme in den Fahrzeuginnenraum durch das relativ niedrige Emissionsvermögen des Schichtensystems entgegen gewirkt werden. Somit kann in vorteilhafter Weise ein synergistischer Effekt hinsichtlich des Wärmeeintrags in den Fahrzeuginnenraum erzielt werden. Eine Tönung der Scheibe kann in an sich bekannter Weise durch Aufbringen einer absorbierenden Schicht, beispielsweise eine Folie aus Silikon, oder durch den Zusatz absorbierender Substanzen zum Scheibenmaterial, beispielsweise Fe₂O₃ oder Co₃O4, erreicht werden. Erfindungsgemäß ist zumindest eine Einzelscheibe getönt, so dass infrarote und sichtbare Strahlung zumindest teilweise absorbierbar ist, wobei die Transmission im lichtoptischen Strahlungsbereich (T_{L}(A)) des Strahlers D65 gemäß ISO-Norm 9050 kleiner als 20% ist.

In dem Schichtensystem liegt die Dicke einer einzelnen Funktionsschicht vorteilhaft in einem Bereich zwischen 5 und 35 nm, insbesondere zwischen 5 und 25 nm und kann beispielsweise zwischen 8 bis 15 liegen. Insbesondere kann die Dicke einer Funktionsschicht in der Größenordnung von ca. 10 nm liegen, wobei die Dicke zweier Funktionsschichten vorzugsweise nicht größer als 40 bis 50 nm ist. Die Summe aller Funktionsschichten beträgt vorzugsweise maximal 50 nm. Die Funktionsschichten sind beispielsweise unterschiedlich dick.

Die dielektrischen Schichten basieren vorzugsweise auf Siliziumnitrid (Si₃N₄), das insbesondere mit Aluminium dotiert sein kann. Von Vorteil kann es weiterhin sein, wenn wenigstens eine dielektrische Schicht eine Abfolge von Lagen mit starken und schwachem Brechungsindex, wie Si₃N₄/SiO₂ oder Si₃N₄/SiO₂/Si₃N₄ umfasst. Durch die dielektrischen Schichten kann eine Verbesserung der Transparenz der Scheibe im lichtoptischen Bereich erzielt werden. Die Dicke einer einzelnen dielektrischen Schicht liegt vorteilhaft zwischen 5 und 120 nm, insbesondere zwischen 5 und 70 nm und kann beispielsweise eine Stärke im Bereich zwischen 40 und 60 nm haben.

Bei einer weiteren vorteilhaften Ausgestaltung der erfindungsgemäßen Scheibe ist eine Opferschicht, insbesondere auf Basis von Titan und Nickelchrom, zwischen der wenigstens einen Funktionsschicht und der wenigstens einen dielektrischen Schicht angeordnet, wobei es von Vorteil sein kann, wenn jede Funktionsschicht zwischen zwei Opferschichten angeordnet ist. Die Opferschichten dienen zum Schutz der Funktionsschichten beim Erwärmen der Scheibe auf hohe Temperaturen während des Herstellungsverfahrens. Die Dicke einer einzelnen Opferschicht liegt vorzugsweise in der Größenordnung einiger nm und kann beispielsweise zwischen 1 und 3 nm betragen. Die Dicke einer Opferschicht kann auch weniger als 1 nm betragen. Die Opferschichten haben beispielsweise eine gleiche Schichtdicke.

Vorteilhaft ist die erfindungsgemäße Scheibe so ausgebildet, dass sie erhitzt, aufgeschmolzen, getempert, bombiert und/oder emailliert werden kann.

Die Erfindung erstreckt sich weiterhin auf die Verwendung einer wie oben beschriebenen erfindungsgemäßen Scheibe in Fahrzeugen bzw. Fortbewegungsmitteln zur Fortbewegung auf dem Lande, in der Luft oder zu Wasser, insbesondere in Kraftfahrzeugen beispielsweise als Windschutzscheibe, Heckscheibe, Seitenscheibe und/oder Glasdach.

Es versteht sich, dass die verschiedenen Ausgestaltungen der Erfindung einzeln oder in beliebigen Kombinationen realisiert sein können. Insbesondere sind die vorstehend genannten und nachstehend zu erläuternden Merkmale nicht nur in den angegebenen Kombinationen, sondern auch in anderen Kombinationen oder in Alleinstellung einsetzbar, ohne den Rahmen der vorliegenden Erfindung zu verlassen.

### Kurze Beschreibung der Zeichnungen

Die Erfindung wird nun anhand eines Ausführungsbeispiels näher erläutert, wobei Bezug auf die beigefügten Figuren genommen wird. Es zeigen in vereinfachter, nicht maßstäblicher Darstellung:
- Fig. 1: anhand einer schematischen Ansicht ein Ausführungsbeispiel der erfindungsgemäßen Verbundscheibe;
- Fig. 2: anhand einer schematischen Ansicht ein Ausführungsbeispiel eines Einscheibensicherheitsglases, welches nicht Teil der Erfindung ist.

### Ausführliche Beschreibung der Zeichnungen

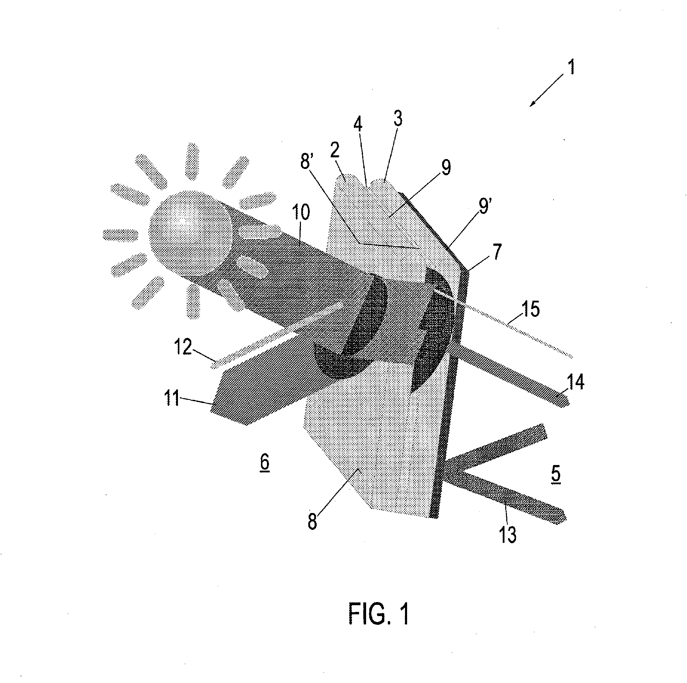

Sei zunächst Fig. 1 betrachtet, worin ein Ausführungsbeispiel einer insgesamt mit der Bezugszahl 1 bezeichneten erfindungsgemäßen Verbundscheibe eines Kraftfahrzeugs in einer perspektivischen schematischen Ansicht dargestellt ist. Demnach umfasst die Verbundscheibe 1 eine starre Außenscheibe 2 und eine starre Innenscheibe 3, die beide als Einzelscheiben ausgebildet und über eine thermoplastische Klebeschicht 4, hier beispielsweise eine Polyvinylbutyralfolie (PVB), Ethylen-Vinyl-Acetat-Folie (EVA) oder Polyurethanfolie (PU), miteinander verbunden sind. Optional kann eine die Akustik verbessernde, geräuschdämpfende Folie eingesetzt werden. Insbesondere bei Regen und Hagel in Kombination mit großen Dachscheiben können störende Geräusche in das Fahrzeuginnere gelangen. Als weitere vorteilhafte Option ist die Verwendung von beschichteten Polyethylenterephtalat(PET)-Folien zu nennen. Eine solche Folie kann beidseitig von PVB-Folien und anschließend den Glasscheiben eingeschlossen werden. Die Beschichtung auf der PET-Folie kann derart gestaltet sein, dass sie bedeutende Anteile der Sonnenstrahlungsenergie reflektiert. Derartige Folien werden schon heute zahlreich in Windschutz- und Seitenscheiben von Fahrzeugen und für Gebäude eingesetzt. Im Rahmen der Erfindung ist es möglich, die Effizienz des Strahlungsreflexionsvermögens zu steigern, indem die Lichttransmission herabgesetzt wird. Für den Aufbau der erfindungsgemäßen Scheibe könnte zu diesem Zweck die dunkel getönte Außenscheibe durch eine klare Scheibe ersetzt werden. Dem Fachmann ist der grundsätzliche Aufbau einer solchen Verbundscheibe beispielsweise aus der industriellen Serienfertigung von Kraftfahrzeugen wohlbekannt, so dass hier nicht näher darauf eingegangen werden muss.

Durch die Verbundscheibe 1 kann eine Öffnung des Kraftfahrzeugs verschlossen werden, so dass ein Fahrzeuginnenraum 5 von einer äußeren (Fahrzeug-)Umgebung 6 abgetrennt wird. Die beiden Einzelscheiben 2, 3 sind beispielsweise aus Glas gefertigt, wobei sie gleichermaßen aus einem nichtgläsernen Material wie beispielsweise Kunststoff hergestellt sein können. Für eine andere Anwendung als im Kraftfahrzeug wäre es auch möglich, die beiden Einzelscheiben 2, 3 aus einem flexiblen Material herzustellen.

Die beiden Einzelscheiben 2, 3 verfügen jeweils über eine äußere Scheibenfläche bzw. Außenfläche 8, 8' und eine innere Scheibenfläche bzw. Innenfläche 9, 9', wobei die beiden Innenflächen 9, 9' einander zugewandt und die beiden Außenflächen 8, 8' voneinander abgewandt sind. Es ist gängige Praxis die Außen- und Innenflächen von der Umgebung 6 zum Fahrzeuginnenraum 5 hin durchzunummerieren, wobei die Außenfläche 8 der Außenscheibe 2 als "Seite 1", die Innenfläche 9 der Außenscheibe 2 als "Seite 2", die Innenfläche 9' der Innenscheibe 3 als "Seite 3" und die Außenfläche 8' der Innenscheibe 3 als "Seite 4" bezeichnet werden.

Auf Seite 4 der Verbundscheibe 1 ist ein insgesamt mit der Bezugszahl 7 bezeichnetes Schichtensystem aufgebracht. Das Schichtensystem 7 umfasst mehrere Schichten, die in der angegebenen Reihenfolge auf der Innenscheibe 3 angeordnet sind:
Innenscheibe/Si₃N₄/Ti/Nb/Ti/Si₃N₄/Ti/Nb/Ti/Si₃N₄

Demnach umfasst das Schichtensystem 7 zwei gleichartige Schichtenfolgen, jeweils bestehend aus einer Nb-Funktionsschicht, die von zwei Ti-Opferschichten umgeben ist, wobei der Verbund aus der zwischen den Ti-Opferschichten befindlichen Nb-Funktionsschicht von zwei dielektrischen Si₃N₄-Schichten umgeben ist.

Die Nb-Funktionsschichten haben hier beispielsweise jeweils eine Schichtdicke von ca. 10 nm. Die Ti-Opferschichten haben beispielsweise jeweils eine Schichtdicke von weniger als 1 nm. Die dielektrischen Si₃N₄-Schichten haben beispielsweise jeweils eine Schichtdicke von ca. 50 nm.

In der Verbundscheibe 1 können durch die beiden Nb-Funktionsschichten sehr vorteilhafte Effekte bezüglich des Wärmeeintrags in den Fahrzeuginnenraum 6 erzielt werden, was im Weiteren noch erläutert wird. Das Schichtensystem 7 ist thermisch hoch belastbar, so dass es die zum Biegen von Glasscheiben erforderlichen hohen Temperaturen von typischer Weise mehr als 600°C ohne Schädigung übersteht, wobei alternativ aber auch thermisch gering belastbare Schichtensysteme vorgesehen sein können. Die Ti-Opferschichten dienen für einen thermischen Schutz der Nb-Funktionsschichten, wobei die Ti-Opferschichten anstelle der Nb-Funktionsschichten als Reaktionspartner mit umgebendem Substanzen, wie O₂, N₂ oder dergleichen dienen und sich dabei chemisch verändern können. Durch die dielektrischen Schichten kann eine bessere optische Transparenz der Verbundscheibe 1 in beiden Sichtrichtungen erzielt werden. Die verschiedenen Schichten des Schichtensystems 7 können beispielsweise durch Sputtern (Magnetron-Kathodenzerstäubung) auf Seite 4 der Innenscheibe 3 aufgebracht werden, wobei gleichermaßen jedes andere geeignete Verfahren zum Abscheiden aus der Gasphase eingesetzt werden kann.

Die Außenscheibe 2 ist in herkömmlicher Weise mit Substanzen, durch die Strahlung im IR- und lichtoptischen Bereich teilweise absorbiert werden kann, versehen.

In Fig. 1 sind durch Pfeile die strahlungsenergetischen Verhältnisse an der Verbundscheibe 1 in schematischer Weise veranschaulicht, wobei die jeweilige Dicke der Pfeile beispielhaft die Stärke bzw. Intensität der Strahlung widerspiegelt. Dabei veranschaulichen:
- Bezugszahl 10, die auf die Außenscheibe 2 der Verbundscheibe 1 auftreffende Sonnenstrahlung,
- Bezugszahl 11, die von der Verbundscheibe 1 an die Umgebung 6 reflektierte Strahlungsenergie R_{E}, d. h. der Anteil des Sonnenlichts, der von der Verbundscheibe 1 reflektiert wird,
- Bezugszahl 12, die von der Verbundscheibe 1 als Wärmestrahlung an die äußere Umgebung 6 emittierte Strahlungsenergie,
- Bezugszahl 13, die von der Verbundscheibe 1 in den Fahrzeuginnenraum 5 reflektierte Strahlungsenergie R_{E}, d. h. der Anteil der Wärmestrahlung aus dem Fahrzeuginnenraum 5, der von der Verbundscheibe 1 zurückgeworfen wird,
- Bezugszahl 14, die von der Verbundscheibe 1 als Wärmestrahlung in den Fahrzeuginnenraum 5 emittierte Strahlungsenergie,
- Bezugszahl 15, die in den Fahrzeuginnenraum 5 transmittierte Strahlungsenergie T_{E} der Sonnenstrahlung 10.

In der folgenden Tabelle sind die in Fig. 1 qualitativ veranschaulichten Strahlungsverhältnisse anhand konkreter Messwerte beschrieben. Zum Vergleich sind die entsprechenden Messwerte von zurzeit in der Serienfertigung von Kraftfahrzeugen verbauten herkömmlichen Verbundglasscheiben mit geringerer und stärkerer Tönung angegeben. In der Tabelle bezieht sich Zeile 1 (#1) auf die herkömmliche Verbundglasscheibe für Dachscheiben mit geringerer Tönung. Zeile 2 (#2) und Zeile 3 (#3) beziehen sich auf die in Fig. 1 veranschaulichte erfindungsgemäße Verbundglasscheibe 1 mit dem Schichtensystem 7. Die in Zeile 3 (#3) dargestellte Verbundglasscheibe 1 zeichnet sich durch eine reduzierte Reflexion sichtbaren Lichts auf der Innenseite aus.

**Tabelle**

| | | 9050 (AM 1.5) Licht D65 10° | | | | 9050 (AM 1.5) Licht D65 10° | | | | 9050 (AM1.5) Licht D65 10° | | | |
|---|---|---|---|---|---|---|---|---|---|---|---|---|---|
| | | Transmission | | | | innenseitige Reflexion | | | | außenseitige Reflexion | | | |
| | εₙ | T_{L}(A) | T_{E} | a* | b* | R_{L}(A) | R_{E} | a* | b* | R_{L}(A) | R_{E} | a* | b* |
| #1 | 0,84 | 21% | 12% | -7,7 | 2,0 | 5% | 4% | -0,4 | 0,1 | 5% | 4% | -0,4 | 0,1 |
| #2 | 0,21 | 7% | 4% | -3,4 | 1,3 | 15% | 28% | 9,8 | 14,1 | 7% | 6% | -1,8 | 0,9 |
| #3 | 0,21 | 4% | 3% | -0,3 | 2,9 | 5% | 12% | -3,8 | -11,5 | 9% | 8% | -0,8 | 4,5 |

Die in der Tabelle angegebenen Werte wurden durch Messungen gemäß ISO-Norm 9050 gewonnen. Dabei wird ein so genannter D65-Strahler (A) mit einem normierten Strahlungsspektrum eingesetzt, wobei die Messergebnisse unter standardisierten Messbedingungen gewonnen wurden.

Für jede Verbundglasscheibe gibt die Tabelle normale Emissivität εₙ an. Bezüglich der Transmission sind die in den Fahrzeuginnenraum 5 transmittierte Strahlungsenergie bzw. Transmission T_{L}(A) in Prozent (%) im lichtoptischen Strahlungsbereich und die in den Fahrzeuginnenraum 5 transmittierte Strahlungsenergie bzw. Transmission T_{E} in Prozent (%) des Strahlers D65 angegeben. Bezüglich der fahrzeuginnenseitigen Reflexion ist die in den Fahrzeuginnenraum 5 reflektierte Strahlungsenergie bzw. Reflexion R_{L}(A) in Prozent (%) im lichtoptischen Bereich der Strahlung der Lichtquelle D65 und die in den Fahrzeuginnenraum 5 reflektierte Strahlung R_{E} in Prozent (%) des kompletten Spektrums des Strahlers D65 angegeben. Bezüglich der fahrzeugaußenseitigen Reflexion ist zur Umgebung 6 reflektierte Strahlungsenergie bzw. Reflexion R_{L}(A) in Prozent (%) im lichtoptischen Bereich der Strahlung des Strahlers D65 sowie die zur Umgebung 6 reflektierte Energie R_{E} des Strahlers D65 angegeben. Die beiden Angaben a*, b* beziehen sich auf die Farbkoordinaten gemäß dem kolorimetrischen Modell.

Demnach kann durch das Schichtensystem 7 der erfindungsgemäßen Verbundscheibe 1 im Unterschied zur herkömmlichen Verbundscheibe durch ein vergleichsweise hohes Reflexionsvermögen insbesondere im langwelligen Strahlungsbereich (IR-Bereich und größere Wellenlängen) zur Umgebung 6 hin und durch die Absorption von Strahlung durch die getönte Außenscheibe 2 eine relativ geringe Transmission im lichtoptischen Bereich von 4% sowie 3% bezüglich des kompletten Strahlungsspektrums des Strahlers D65 erzielt werden. Die fahrzeuginnenseitige Reflexion im sichtbaren Spektralbereich ist mit 5% relativ gering. Dies entspricht trotz einer sehr niedrigen Transmission den Erwartungen, da es optisch mit der höheren Reflexion einer hohen Transmission entspricht. Andererseits ist das totale Reflexionsvermögen mit 12% deutlich größer, was auf einen relativ großen Anteil in der Reflexion nicht sichtbarer Strahlungskomponenten (IR-Bereich und größere Wellenlängen) hinweist. Somit zeichnet sich die Verbundscheibe durch ein besonders gutes Reflexionsvermögen für Wärmestrahlung aus dem Fahrzeuginnenraum 5 auf. Die Emissivität der Verbundscheibe 1 ist mit einem Wert von 0,21 relativ niedrig, so dass die erwärmte Verbundscheibe 1 nur relative wenig Wärmestrahlung in den Fahrzeuginnenraum 5 abgibt.

In Fig. 1 sind diese strahlungsenergetischen Verhältnisse anhand der Dicke der Pfeile veranschaulicht, wobei ein relativ großer Anteil der Strahlungsenergie der Sonnenstrahlung 10 (siehe Pfeil 11) zur Umgebung 6 reflektiert R_{E} und dementsprechend nur ein relativ geringer Anteil T_{E} (siehe Pfeil 15) transmittiert wird. Andererseits wird ein relativ hoher Anteil der Wärmestrahlung in den Fahrzeuginnenraum 5 zurückgeworfen (siehe Pfeil 13).

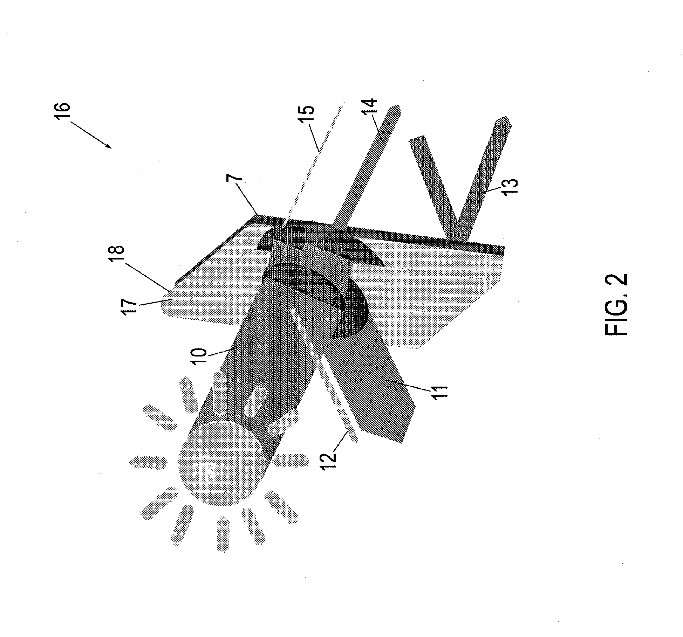

In Fig. 2 ist ein getempertes Einscheibensicherheitsglas 16 mit nur einem einzelnen Substrat bzw. Einzelscheibe 17 gezeigt. Um unnötige Wiederholungen zu vermeiden, werden lediglich die Unterschiede zur Verbundscheibe 1 erläutert und ansonsten wird auf die zu Fig. 1 gemachten Ausführungen Bezug genommen. Auf einer dem Fahrzeuginnenraum 5 zugewandten bzw. fahrzeuginnenseitigen Scheibenfläche 18 ist das Schichtensystem 7 auf die Einzelscheibe 17 aufgebracht. Die Einzelscheibe kann getönt sein.

Die in den beiden Figuren veranschaulichten Scheiben können besonders vorteilhaft als Seiten- oder Dachscheibe in einem Kraftfahrzeug eingesetzt werden. Ein bester Effekt kann dort erreicht werden, wo keine gesetzlichen Regelungen für die Lichttransmission bestehen, nämlich in Kraftfahrzeugen bei Dachscheiben und länderabhängig bei Seitenscheiben hinter der B-Säule, Dreiecksscheiben Heckscheiben.

Die Erfindung stellt eine insbesondere getemperte Verbundscheibe für Fahrzeuge mit verbessertem thermischem Komfort zur Verfügung, bei welcher durch eine Reduzierung der Emissivität die in den Fahrzeuginnenraum eingetragene Wärme verringert werden kann. Das Schichtensystem zeichnet sich durch ein relativ großes Reflexionsvermögen für Strahlung im und oberhalb des IR-Bereichs aus, so dass auch im Winter ein vorteilhafter Effekt erreicht werden kann, da die im Fahrzeuginnenraum erzeugte Wärmestrahlung in den Fahrzeuginnenraum zurückgeworfen wird. Zudem kann die transmittierte Energie verringert werden, wobei Strahlung mit Wellenlängen im sichtbaren Bereich weniger stark und Strahlung mit Wellenlängen im und oberhalb des IR-Bereichs stärker reflektiert wird. Die erfindungsgemäße Scheibe kann dadurch mehr Strahlung zur Umgebung hin reflektieren als herkömmliche absorbierende Scheiben mit vergleichbarer Transmission. Hierdurch ist eine Reduktion des Einsatzes einer Klimatisierungseinrichtung möglich, wodurch Kosten beim Betrieb des Fahrzeugs eingespart und die Erzeugung schädlichen Treibhausgases (CO₂) reduziert werden kann.

### Bezugszeichenliste

- 1: Verbundscheibe
- 2: Außenscheibe
- 3: Innenscheibe
- 4: Klebeschicht
- 5: Fahrzeuginnenraum
- 6: Umgebung
- 7: Schichtensystem
- 8, 8': Außenfläche
- 9, 9': Innenfläche
- 10: Sonnenstrahlung
- 11: reflektierte Strahlungsenergie (außen)
- 12: emittierte Strahlungsenergie (außen)
- 13: reflektierte Strahlungsenergie (innen)
- 14: emittierte Strahlungsenergie (innen)
- 15: transmittierte Strahlungsenergie
- 16: Einscheibensicherheitsglas
- 17: Einzelscheibe
- 18: (innere) Scheibenfläche

## Patentansprüche

1. Verbundscheibe (1) für eine Öffnung eines Fahrzeugs, welche zwei durch eine thermoplastische Klebeschicht (4) miteinander verbundene Einzelscheiben (2, 3) sowie ein auf einer Scheibenfläche (9') der Einzelscheiben angeordnetes Schichtensystem (7) umfasst, wobei das Schichtensystem (7) wenigstens eine Funktionsschicht auf Basis zumindest eines Metalls aus der Gruppe, bestehend aus Niob, Tantal, Molybdän und Zirkonium, und eine dielektrische Schicht aufweist, wobei die Funktionsschicht zwischen der Scheibenfläche (9') und der dielektrischen Schicht angeordnet ist, **dadurch gekennzeichnet, dass** das Schichtensystem (7) auf einer Seite 4 entsprechenden Scheibenfläche (9') einer als Innenscheibe (3) dienenden Einzelscheibe angeordnet ist, wobei zumindest eine Einzelscheibe (2) getönt ist, so dass infrarote und sichtbare Strahlung zumindest teilweise absorbierbar ist, wobei die Transmission im lichtoptischen Strahlungsbereich (T_{L}(A)) des Strahlers D65 gemäß ISO-Norm 9050 kleiner als 20% ist.

2. Verbundscheibe (1) nach Anspruch 1, bei welcher die wenigstens eine Funktionsschicht zwischen zwei transparenten dielektrischen Schichten angeordnet ist.

3. Verbundscheibe (1) nach einem der Ansprüche 1 oder 2, bei welcher das Schichtensystem (7) zumindest zwei Funktionsschichten aufweist.

4. Scheibe (1, 16) nach einem der Ansprüche 1 bis 3, bei welcher zumindest eine Opferschicht zwischen wenigstens einer Funktionsschicht und wenigstens einer dielektrischen Schicht angeordnet ist.

5. Scheibe (1, 16) nach einem der Ansprüche 1 bis 4, bei welcher wenigstens eine Funktionsschicht zwischen zwei Opferschichten angeordnet ist.

6. Scheibe (1, 16) nach einem der Ansprüche 1 bis5, welche so ausgebildet ist, dass ein fahrzeugaußenseitiges Reflexionsvermögen für Sonnenstrahlung größer als 5% ist.

7. Scheibe (1, 16) nach einem der Ansprüche 1 bis 6, welche so ausgebildet ist, dass ein fahrzeuginnenraumseitiges Reflexionsvermögen für sichtbares Licht kleiner als 7%, insbesondere kleiner als 4%, ist.

8. Scheibe (1, 16) nach einem der Ansprüche 1 bis 7, welche so ausgebildet ist, dass ein fahrzeuginnenraumseitiges Reflexionsvermögen im infraroten Wellenlängenbereich größer als 10% ist.

9. Scheibe (1, 16) nach einem der Ansprüche 1 bis 8, welche so ausgebildet ist, dass ein fahrzeuginnenraumseitiges Reflexionsvermögen im und oberhalb des infraroten Wellenlängenbereichs größer als 20% ist.

10. Scheibe (1, 16) nach einem der Ansprüche 1 bis 9, welche so ausgebildet ist, dass ein Transmissionsvermögen im und oberhalb des infraroten Wellenlängenbereichs zu einem Fahrzeuginnenraum (5) hin geringer als 3% ist.

11. Scheibe (1, 16) nach einem der Ansprüche 1 bis 10, welche so ausgebildet ist, dass eine fahrzeuginnenraumseitige Emissivität geringer als 50% ist.

12. Verwendung einer Verbundscheibe nach einem der Ansprüche 1 bis 11 in Fortbewegungsmitteln zur Fortbewegung auf dem Lande, in der Luft oder zu Wasser, insbesondere in Kraftfahrzeugen beispielsweise als Windschutzscheibe, Heckscheibe, Seitenscheibe und/oder Glasdach.

## Claims

1. Laminated glass (1) for an opening of a vehicle, which comprises two individual panes (2, 3) interconnected by a thermoplastic adhesive layer (4) as well as a layering system (7) arranged on one glass surface (9') of the individual panes, wherein the layering system (7) has at least one functional layer based on at least one metal from a group consisting of niobium, tantalum, molybdenum and zirconium, and a dielectric layer, wherein the functional layer is arranged between the glass surface (9') and the dielectric layer, **characterized in that** the layering system (7) is arranged on a glass surface (9') corresponding to side 4 of an individual pane serving as an inner pane (3), wherein at least one individual pane (2) is tinted so that infrared and visible radiation is at least partially absorbable, with the transmission in the light optical radiation range (T_{L}(A)) of the D65 radiator in accordance with ISO standard 9050 is less than 20%.

2. Laminated glass (1) according to claim 1, in which the at least one functional layer is arranged between two transparent dielectric layers.

3. Laminated glass (1) according to one of claims 1 or 2, in which the layering system (7) has at least two functional layers.

4. Pane (1, 16) according to one of claims 1 to 3, in which at least one sacrificial layer is arranged between at least one functional layer and at least one dielectric layer.

5. Pane (1, 16) according to one of claims 1 to 4, in which at least one functional layer is arranged between two sacrificial layers.

6. Pane (1, 16) according to one of the claims 1 to 5, which is configured in such a manner that a vehicle exterior-side reflectivity for solar radiation is greater than 5%.

7. Pane (1, 16) according to one of claims 1 to 6, which is configured in such a manner that a vehicle interior-side reflectivity for visible light is less than 7%, in particular less than 4%.

8. Pane (1, 16) according to one of claims 1 to 7, which is configured in such a manner that a vehicle interior-side reflectivity in the infrared wavelength range is greater than 10%.

9. Pane (1, 16) according to one of claims 1 to 8, which is configured in such a manner that a vehicle interior-side reflectivity in and above the infrared wavelength range is greater than 20%.

10. Pane (1, 16) according to one of claims 1 to 9, which is configured in such a manner that a transmission capacity in and above the infrared wavelength range towards the interior of a vehicle (5) is less than 3%.

11. Pane (1, 16) according to one of claims 1 to 10, which is configured in such a manner that a vehicle interior-side emissivity is lower than 50%.

12. Use of a laminated glass according to one of the claims 1 to 11 in transportation means for locomotion on the land, in the air or on water, in particular in motor vehicles, for example, as a windshield, rear window, side window and/or glass roof.

## Revendications

1. Vitrage laminé (1) pour une ouverture d'un véhicule, qui inclut deux feuilles individuelles (2, 3) interconnectées par une couche thermoplastique (4) adhésive ainsi qu'un système de stratification (7) disposée sur une surface vitrée (9') des feuilles individuelles où le système de stratification (7) comprend au moins une couche fonctionnelle basée sur au moins un métal parmi un groupe composé de niobium, tantale, molybdène et zirconium, et une couche diélectrique, où la couche fonctionnelle est disposée entre la surface vitrée (9') et la couche diélectrique, **caractérisé en ce que** le système de stratification (7) est organisé sur une surface de verre (9') correspondant a la face 4 d'une feuille individuelle servant de feuille intérieure (3) où au moins une feuille individuelle (2) est teintée afin que le rayonnement infrarouge et visible soit au moins partiellement résorbable, où la transmission dans une zone de rayonnement optique (T_{L}(A)) du radiateur D65 conformément à la norme ISO 9050 est inférieure à 20 %.

2. Vitrage laminé (1) selon la revendication 1, dans lequel au moins une couche fonctionnelle est arrangée entre deux couches diélectriques transparentes.

3. Vitrage laminé (1) selon l'une des revendications 1 ou 2, dans lequel le système de stratification (7) présente au moins deux couches.

4. Feuille de verre (1, 16) selon l'une des revendications 1 à 3, dans lequel au moins une couche sacrificielle est arrangée entre au moins une couche fonctionnelle et au moins une couche diélectrique.

5. Feuille de verre (1, 16) selon l'une des revendications 1 à 4, dans lequel au moins une couche fonctionnelle est arrangée entre deux couches sacrificielle.

6. Feuille de verre (1, 16) selon l'une des revendications 1 à 5 qui est conçu de telle manière qu'un véhicule extérieur-réflectivité du rayonnement solaire est supérieure à 5 %.

7. Feuille de verre (1, 16) selon l'une des revendications 1 à 6, qui est conçu de telle manière, qu'une réflectivité de lumière visible du côté de l'intérieur d'un véhicule est inférieur à 7 %, en particulier moins de 4 %.

8. Feuille de verre (1, 16) selon l'une des revendications 1 à 7, qui est conçu de telle manière, qu'une réflectivité dans la gamme de longueur d'onde infrarouge du côté de l'intérieur d'un véhicule est supérieure à 10 %.

9. Feuille de verre (1, 16) selon l'une des revendications 1 à 8, qui est conçu de telle manière, qu'une réflectivité dans et au-dessus de la plage de longueur d'onde infrarouge du côté de l'intérieur d'un véhicule est supérieure à 20 %.

10. Feuille de verre (1, 16) selon l'une des revendications 1 à 9, qui est conçu de telle manière, qu'une capacité de transmission vers l'intérieur d'un véhicule (5) dans et au-dessus de la plage de longueur d'onde infrarouge est inférieur à 3%.

11. Feuille de verre (1, 16) selon l'une des revendications 1 à 10, qui est conçu de telle manière, qu'une émissivité du côté de l'intérieur du véhicule est inférieure à 50 %.

12. Utilisation d'un vitrage laminé selon l'une des revendications 1 à 11 dans des moyens de locomotion, pour la locomotion sur la terre, dans l'air ou sur l'eau, en particulier dans les véhicules à moteur, par exemple, comme pare-brise, lunette arrière, fenêtre latérale et/ou toit en verre.
